# EUROPEAN PATENT APPLICATION

(11) **EP 0 819 649 A1**
(43) Date of publication of application: **21.01.1998**
(21) Application number: 97111977.1
(22) Date of filing: 14.07.1997
(51) Int. Cl.: C02F 1/44, C02F 1/72, C02F 1/74, C02F 1/78

(54) **Photocatalytic method for treatment of contaminated water**

(30) Priority: 16.07.1996 RU 96114464
(71) Applicant: ISKRA INDUSTRY CO., LTD., Chuo-ku, Tokyo (JP)
(72) Inventor: Akhatovich, Makhmutov Fanilj, Tula city, (RU); Nikolaevich, Mishkin Roman, Tula city, (RU); Ivanovna, Tsareva Elena, Tula city, (RU)
(74) Representative: Klunker . Schmitt-Nilson . Hirsch

(57) **Abstract**

This invention relates to the field of natural and waste water purification, and water treatment, in particular to water purification from toxic and hardly decomposing aromatic and chlorinated compounds by the photocatalytic method.

In order to simplify the method and reduce power consumption the process of photocatalysis consisting of the stage of putting solution into a contact with a semiconducting photocatalyst, irradiation with ultraviolet, and separation of purified water from the photocatalyst by the membrane filtration is carried out within the united process using the photocatalytically active semiconducting membrane at certain volume rate of filtration, pressure and tangential flow value. Filtration is performed through porous membranes of dynamic or ceramic type made of a semiconducting material. For the process intensification active oxidants are used: oxygen or hydrogen peroxide, or ozone while gas phase oxidants may be supplied through a gas-permeable water-impermeable membrane.

## Description

### BACKGROUND OF INVENTION

### 1. Field of Invention

This invention relates to the field of natural and waste water purification and water treatment, in particular to water purification from dissolved organics, especially toxic and hardly decomposing aromatic and halogenaromatic compounds.

### 2. Related Art

It is known the method of decomposition of such organics as polychlorinated biphenyls providing their contact with titanium oxide ceramic membranes at their simultaneous irradiation with ultraviolet [PCT Patent Application No 89/00985, Publication No 88/02539, published 9.02.89 filed 27.07.87; Kottelat J.P., et al "The 1990 Int. Congress on Membranes and Membrane Processes" Chicago, USA, 1990, p.1125-1127]. According to the above method contact of the substrate solution with the ceramic porous membrane is provided either at their static contact [PCT Patent Application No 89/00985, Publication No 88/02539, published 9.02.89] or in the solution flow along the porous membrane surface which is coated on the UV-transparent impermeable support - the photoreactor wall [Kottelat J.P., et al "The 1990 Int. Congress on Membranes and Membrane Processes" Chicago, USA, 1990, p.1125-1127].

But the above method does not eliminate resistance of the substrate diffusion in the membrane pores to the internal surface of the membrane photocatalyst, and as a result specific photocatalytic activity of the membrane is insufficient because of ineffective application of its internal porous structure. In this case the photocatalyst based on TiO₂ is characterized as a membrane one according to its forming method, but is not such because the transmembrane transport of the substrate is missing.

It is known the method of waste water purification from organics by a photochemical oxidation [Certificate of Authorship USSR No 1587011, Application No 4336996, published 23.08.90, Bulletin No 31]. While solution is passed through a membrane composed of 50 - 70 mµ film of titanium-containing sludge of waste water from the papermaking production providing irradiation for 8 - 18s within 150 - 250 nm wave length range, and the film is coated on a quartz ceramic support.

But in this method a dynamic membrane of unknown composition is used, and besides it is the papermaking production effluent and consists of multicomponent organic (37.6%) and mineral (62.4%) parts of a disperse phase. Based on the Certificate of Authorship data it is impossible to evaluate the photocatalytic activity of the membrane as there is no any information about the background experiment without the membrane. Nevertheless, taking into consideration that the author used rather short time periods (8 - 18s) of solution contact with the membrane which are hardly sufficient for the heterogeneous photocatalytic process, - a hard UV-irradiation which itself causes destruction of organics, especially colored substances, one can make a conclusion that the author carried out a homogeneous process of organic impurities photolysis, and the membrane limits the solution flow through the photolysis zone. While the basic advantages of ceramic photocatalysts for the organics oxidation are not used, i.e.:
- possibility of a complete degradation of steady highly toxic organics to non-toxic products of complete oxidation;
- simplicity and low power consumption due to participation in the process of near ultraviolet and a part of visible spectrum, up to 370 nm, and in particular, a major part of the solar spectrum.

The most close is the process of water purification from oxidizable contaminants by the method of photocatalytic oxidation described in USP No. 5,118,422. Before the treatment 0.01 - 0.2% of a semiconducting powder material (0.01 - 1 mµ fraction) are added to water. As semiconducting additives TiO₂, ZnO, CdS, WO₃, Fe₂O₃, etc may be used. A mixture is passed through a tube type reactor with 2000 Reynolds number under conditions of oxygen introduction or spontaneous absorption from air, ultraviolet source is installed inside the reactor while duration of the solution treatment is calculated based on data of the photocatalytic reaction kinetics. After treatment the mixture is subjected to a tangential membrane filtration in order to separate the powder additives providing a periodical reverse filter flashing and recycle of the semiconducting powder to the photooxidation stage.

The disadvantage of the above method is a complicated performance as it includes permanent separate stages of the powder photocatalyst feeding, suspension exposition to UV-irradiation providing agitation and separation of the photocatalyst. Moreover, it is known that application of suspended photocatalyst causes additional losses of a radiant energy as a heat one because of the light scattering in the suspension.

### SUMMARY OF THE INVENTION

The object of the proposed invention is to reduce power consumption and simplify the method of photocatalytic decomposition of dissolved substances using semiconducting photocatalysts.

The above object is provided by the fact that the stage of dissolved substances contact with the semiconducting photocatalyst, UV-irradiation and separation of purified water from the photocatalyst by membrane filtration are carried out within the united process of the solution filtration at 0.3 - 12 atm g pressure through the porous membrane made of a semiconducting material in the course of its irradiation with ultraviolet.

Accordingly, the present invention provides a method for water purification from dissolved organics which incorporates putting solution into a contact with a semiconducting photocatalyst, their irradiation with ultraviolet within the time period sufficient for the impurities destruction, and separation of the purified water from the photocatalyst by the membrane filtration, the distinction of which is that all three stages are performed within the united process by the solution filtration at 30 - 180 l/h m² volume filtration rate and at 0.15 - 12 atm g pressure through a porous membrane made of a semiconducting material based on TiO₂, CdS, SrTiO₃, Fe₂O₃ providing a simultaneous membrane irradiation with ultraviolet in the presence of the oxidizing agent excess.

### BRIEF EXPLANATION OF DRAWING

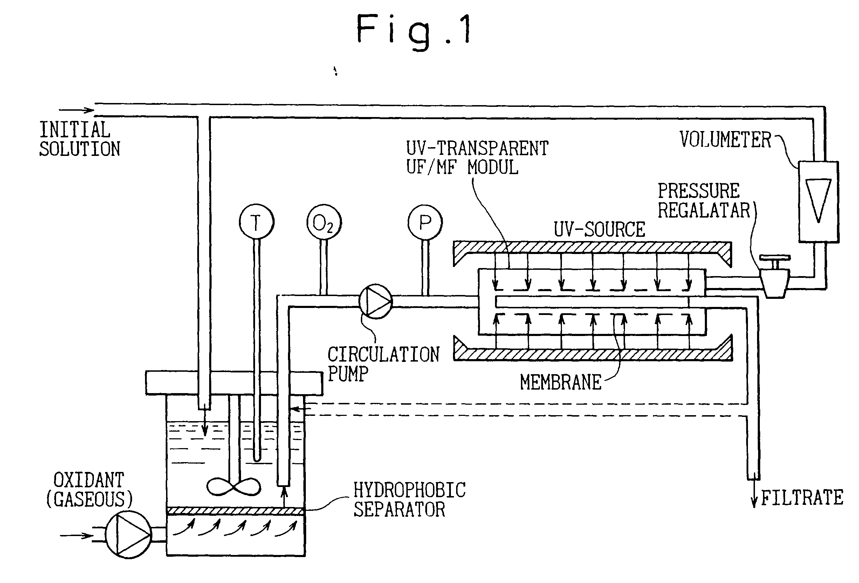

Figure 1 schematically represents an apparatus for carrying out the present invention.

In order to provide the above object the solution containing dissolved organics is passed under pressure through a membrane photoreactor which contains a porous membrane of a flat or tube form, the surface layer of which consists of a semiconducting photocatalyst based on TiO₂ (preferably anatase form), CdS, SrTiO₃, Fe₂O₃. The diagram of the membrane photoreactor and the process in general is shown in Fig. 1. The membrane surface is exposed to irradiation with ultraviolet through a UV-transparent wall of the photoreactor that in case of the ultraviolet wave length less than the width of the forbidden zone of the particular semiconductor (<370 nm for TiO₂) causes the formation in the presence of dissolved Oxygen, ozone or hydrogen peroxide of such highly active oxidizing forms as a hydroxyl-radical and a hole in the valent zone. Molecules of dissolved substances are exposed to the oxidative destruction in the course of filtration through the membrane pores of micron and submicron size on their surface and under their influence. Filtrate passed through the membrance contains only products of dissolved substances photooxidation.

This invention is based on the application of porous membranes from semiconducting oxides combining both a photocatalytic activity and a composite porous structure the nature of which provides control of the transmembrane flow value in such a way that to provide a complete photooxidation of dissolved substances. In order to execute this invention it is preferably to use membranes of a minimum pore size in the surface layer up to 0.004 mµ. While, first, it is actually eliminates the resistance of diffusion in the membrane pores to the catalytically active membrane surface, and second, the thickness of the UV-transparent and i.e. photocatalytically active membrane layer is increased. In this invention two types of membrane may be used: ceramic and dynamic the preparation procedures of which are described in Example 1 and 2, respectively. When ceramic type membranes with pores less than 0.004 mµ are used, or dynamic type with particle size in the surface layer less than 0.02 mµ the filtration resistance is extremely increased, and when the values exceed 0.50 and 3.0 mµ, respectively, the degree of impurities photooxidation is insufficient.

Advantages of the proposed membrane form of the photocatalyst providing the substrate photooxidation in the course of transmembrane filtration may be realized under conditions of a long-term preservation of its photocatalytic activity. Our studies revealed that it is observed, first, at not very high total concentration of dissolved oxidized organics, not more than 2400 ppm, and secondly, at excess of the oxidizing agent. The latter condition is valid when both air oxygen and active oxidants such as ozone and hydrogen peroxide are used. Mole excess of oxygen and hydrogen peroxide should be not less than 3 and that of ozone - not less than 2; observance of these conditions prevents the formation of coloured carbonized products of incomplete oxidation which poison the photocatalyst surface. Excess of active oxidants of more than 35 and 16, respectively, not reasonably increases the chemicals consumption. Heterogeneous products of carbonization may sometimes be formed under conditions of non-catalytic photolysis of dissolved organic substances at their considerable concentration.

In order to protect the membrane photocatalyst from poisoning it is suggested to use in such cases a filtration mode in a tangential flow providing 0.2 - 5.0 m/s value of the latter. Below 0.2 m/s the heterogeneous components of solution are not entrained with the flow, and above 5.0 m/s power consumption for the solution circulation is extremely increased. Pressure of filtration in this invention is 0.15 - 12 atm g, and is selected based on the pressure scanning test in the course of photooxidation at filtration as pressure under which completeness of photooxidation of dissolved substances in the filtrate is rather high, while the process rate is rather high too. When pressure drop is less than 0.15 atm g, and more than 12 atm g it is not possible to provide the required volume rate of filtration 30 - 180 l/h m² on ceramic and dynamic membranes at which the degree of photooxidation of dissolved substrate in the combined process (should be at least 90%) is high enough.

According to this invention it is possible to purify water from various dissolved organics the concentration of which is not more than 2400 ppm as at their higher content the membrane surface may be irreversibly blocked with carbonized products of photodecomposition followed by decrease of its photocatalytic activity. The process is effective even for water purification from dissolved chloroaromatics which are very toxic, poorly decomposed under conditions of biological oxidation, and poison the applied strains of microorganisms.

### EXAMPLES

Examples show results of a photooxidative degradation of such compounds as: 4-chlorophthalic acid (CPA), 4-chlorophenol (CP), phenol (P), 2,4'-dichlorophenol (DCP), 2,4,6-trichlorophenol (TCP), trichloroethylene (TCE). Analysis of filtrates for the content of feed substances and possible intermediates after the photocatalytic oxidation (by methods of a liquid chromatography, UV- and IR-spectroscopy, analysis of off-gases, titration of chloride-anion) showed that the only reaction products are CO₂, H₂O, Cl-.

The proposed invention is illustrated but not limited by Examples (including Comparative Examples).

### Example 1.

To produce a ceramic membrane a forming solution is prepared: to 0.3 mole of tetrabutoxytitanium 280 ml of butyl alcohol are added and stirred at room temperature. Then to 280 ml of butyl alcohol 14 ml of distilled water are added, the resulted mixture is added to the solution of tetrabutoxytitanium. For peptization of the produced residue 2.8 ml of nitric acid are used. The resulted solution is fed by the dipping method on the external surface of a tube type porous support of sintered titanium with 3 - 5 mµ pore size, and dried for 10 min at room temperature. Then the calcination stage is performed to form a ceramic structure. Calcination is carried out in argon medium in the following mode:
- heating up to 400°C at 0.5°C/min rate;
- heating from 400°C up to 600°C at 0.5°C/min rate;
- cooling from 600°C up to 20°C at 0.5°C/min rate.

For the membranes prepared an average pore size is calculated by Poiseuille equation based on value of water flow through a membrane at a fixed pressure drop, taking into consideration the thickness of the membrane coating, and making a correction to the porous support flow resistance. The average size of pores for the resulted membrane is 0.50 mµ.

The produced ceramic membrane in the form of a tube of 8 mm diameter and 140 mm length and with an external membrane coating is positioned in a cylindrical photoreactor with UV-transparent quartz shell the diagram of which is shown in Fig. 1. The gap between the membrane surface and the reactor wall is 1.5 mm. The membrane photoreactor is installed along the axial line of UV-irradiation unit which consists of 2 low pressure rod-type mercury lamps of 250W power each, and elliptic light-reflecting screen the surface geometry of which provides a uniform irradiation treatment of the photoreactor surface. Then starts circulation of CPA solution of 10 ppm concentration charged into a circulation vessel through the photoreactor at the rate corresponding to the value of tangential flow along the membrane surface of 0.2 m/s. Oxygen concentration in the solution according to Clark oxygen electrode is 30 ppm that is 3 times mole excess. Filtration pressure of 0.5 atm g is set by a back pressure regulator, and 100 l/m² h volume rate of filtration. When the solution circulation is started UV-irradiation is switched on providing a batchwise solution sampling from the circulation vessel and analyzing by the method of high pressure liquid chromatography. Period of time within which CPA concentration is 10 times decreased and evaluated by the kinetic curve of CPA photodecomposition is 16 minutes. Chromatograms record in the course of photooxidation the formation of different intermediates but by the end of a 16-minutes cycle their signs disappear.

### Example 2.

In order to produce a dynamic membrane to 0.3 mole of tetrabutoxytitanium (TBT) 580 ml of butanol are added at stirring. Hydrolysis of TBT is performed with 1080 ml of bidistilled water at stirring and room temperature. The resulted precipitate is filtrated and flushed with excess of bidistillate. Peptization is performed with 10 ml of nitric acid at stirring. The produced slurry dispersed in distilled water up to 0.5% mass is precipitated on the surface of porous support made of stainless steel. The precipitation is carried out in 3.0 m/s tangential flow. The average size of particles of the introduced dynamic membrane layer is evaluated based on data of the sedimentation analysis of feed suspension and the suspension after the dynamic layer precipitation. Fraction of TiO₂ precipitated on the support surface and forming the dynamic layer is not more than 20 - 30% of the initial suspension mass.

The resulted dynamic membrane with 3.0 mµ average particle size of the coating and on the tube type support is put into a cylindrical photoreactor, and CPA is subjected to the photooxidation in aqueous solution of 100 ppm concentration in the course of its filtration through the dynamic membrane as described in Example 1 but at actual absence of the tangential flow (less than 1 mm/s) at 0.3 atm g filtration pressure and 180 l/m²·h volume filtration rate. While 1200 ppm of air oxygen are fed into the circulation vessel through a non-porous gas-permeable water - impermeable membrane of polydimethylsiloxane on the support. The results are shown in Table 1.

Example 3 - 11 are similar to Example 1, 2, the distinctive features of membrane photocatalysts and process conditions as well as results are given in Table 1.

### Example 12 (comparative).

It is provided under conditions of prototype USP No. 5,118,422 using a photocatalytically active TiO₂ suspension produced as described Example 2.

As data from the Table reveal the photooxidation on semiconducting membranes in the course of filtration under proposed range of the process conditions provides a rapid and complete water purification from the dissolved organic impurities including toxic and hardly decomposing chlorinated substances.

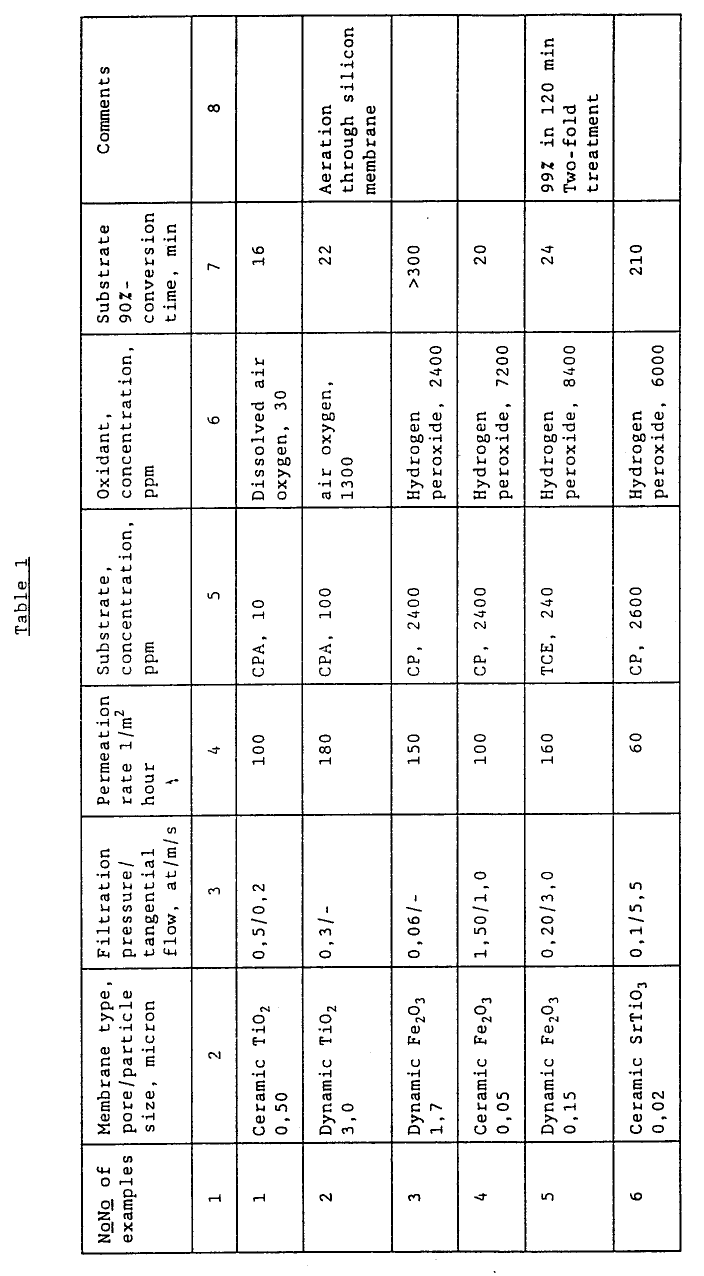

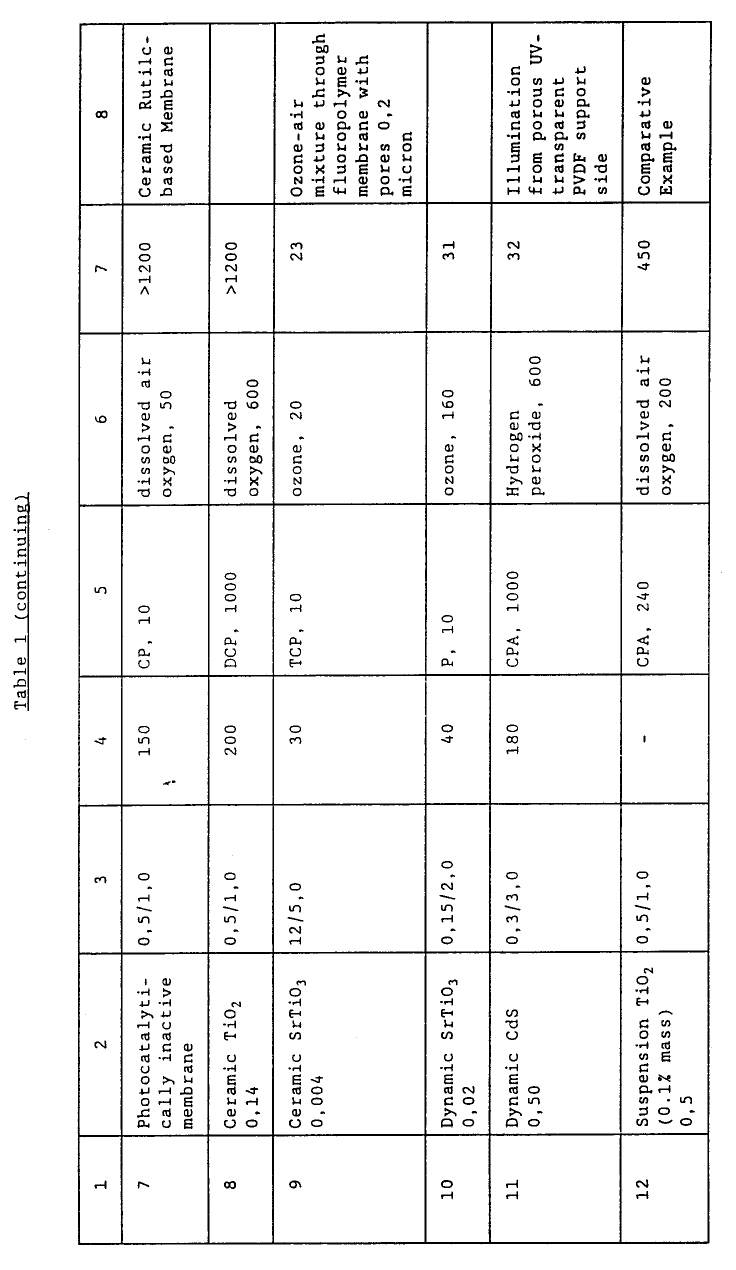

## Claims

1. A method of water purification from dissolved organics comprising the steps of putting solution into a contact with a semiconducting photocatalyst, their irradiation with ultraviolet within the time period sufficient for the impurities destruction, and separation of the purified water from the photocatalyst by the membrane filtration, wherein all three stages are performed within the united process by the solution filtration at 30 - 180 l/h m² volume filtration rate and 0.15 - 12 atm g pressure through a porous membrane made of a semiconducting material based on TiO₂, CdS, SrTiO₃, Fe₂O₃ providing a simultaneous membrane irradiation with ultraviolet in the presence of the oxidizing agent excess.

2. A method according to claim 1 wherein a combined process of photoradiation/filtration incorporates a preliminary stage of oxygen or hydrogen peroxide feeding as an oxidizing agent in the amount of 3 - 35 of mole excess to the total concentration of dissolved organics.

3. A method according to claim 1 the distinction of which is that into the organics solution 2 - 16 mole excess of ozone as oxidizing agent is preliminary fed.

4. A method according to any one of claims 1 to 3, wherein the total concentration of dissolved organics does not exceed 2400 ppm.

5. A method according to any one of claims 1 to 4, wherein oxygen or ozone-oxygen mixture is fed through a gas-permeable water-impermeable membrane.

6. A method according to any one of claims 1 to 5, wherein the porous membrane a dynamic membrane in the form of a layer of fine powder of a semiconducting photocatalyst with particle size of 0.02 - 3.0 mµ on a large pore support is used.

7. A method according to any one of claims 1 to 6, wherein the porous support is made of UV-transparent material and the membrane is exposed to irradiation with ultraviolet on the porous support side.

8. A method according to any one of claims 1 to 5, wherein the porous membrane a sintered ceramic membrane with 0.004 - 0.50 mµ pore size is used.

9. A method according to any one of claims 1 to 8, wherein the process is performed at 0.2 - 5.0 m/s tangential flow.
